**Europäisches Patentamt**

**European Patent Office**

**Office européen des brevets**

(11) Veröffentlichungsnummer: **0 481 173 A1**

# EUROPÄISCHE PATENTANMELDUNG

(21) Anmeldenummer: **91111661.4**

(22) Anmeldetag: **12.07.91**

(51) Int. Cl.5: **B29C 65/74**

(30) Priorität: **17.09.90 DE 4029440**

(43) Veröffentlichungstag der Anmeldung:
**22.04.92 Patentblatt 92/17**

(84) Benannte Vertragsstaaten:
**BE DE ES FR GB IT**

(71) Anmelder: **Windmöller & Hölscher**
**Münsterstrasse 50**
**W-4540 Lengerich(DE)**

(72) Erfinder: **Achelpohl, Fritz, Ing.-grad.**
**Banningstrasse 3**
**W-4540 Lengerich(DE)**

(74) Vertreter: **Gossel, Hans K., Dipl.-Ing.**
**Lorenz-Seidler-Gossel et al**
**Widenmayerstrasse 23**
**W-8000 München 22(DE)**

(54) Verfahren zum Herstellen von Kunststoffbeuteln.

(57) Die Erfindung betrifft ein Verfahren zum Herstellen von Kunststoffbeuteln, bei welchem eine Kunststoffschlauchbahn taktweise um eine Beutellänge vorgezogen wird, diese mittels eines Querschneidemessers geschnitten wird und in welchem eine Bodennaht mit einem dauerbeheizten Schweißbackenpaar gebildet wird. Zur Lösung der Aufgabe, eine qualitativ bessere Bodennaht zu bilden, erfaßt das dauerbeheizte Schweißbackenpaar (11) die Kunststoffschlauchbahn (3) bereits vor dem Schneiden und legt diese fest. Die Kunststoffschlauchbahn (3) wird dann durch das Querschneidemesser (10) geschnitten, bevor die Wärme von dem Schweißbackenpaar (11) auf die Kunststoffschlauchbahn (3) vollständig übergegangen ist.

Fig. 1

Die Erfindung betrifft ein Verfahren zum Herstellen von Kunststoffbeuten, in welchem eine Kunststoffschlauchbahn taktweise jeweils um eine Beutellänge vorgezogen wird, diese mittels eines Querschneidemessers geschnitten wird und eine Bodennaht mit einem dauerbeheizten Schweißbackenpaar gebildet wird.

Ein derartiges Verfahren ist bereits aus der DE-OS 32 04 492 bekannt. Gemäß diesem Stand der Technik wird die Kunststoffschlauchbahn nach Vorziehen um eine Beutellänge leicht gespannt und sodann durch Herunterfahren eines über der Kunststoffschlauchbahn angeordneten Trennmesserhalters mit dem an diesem befestigte Querschneidemesser getrennt. Nach Durchtrennen der Bahn wird diese durch das unmittelbar neben dem Querschneidemesser angeordnete dauerbeheizte Schweißbackenpaar erfaßt, wobei die Bodenschweißnaht gebildet wird. Bei dieser Verfahrensführung ist allerdings zu beobachten, daß sich die aufeinanderliegenden Folien der Kunststoffschlauchbahn nach Durchtrennen mit dem Querschneidemesser leicht kräuseln, so daß die Folien nicht mehr glatt aufeinanderliegen. Werden nun die Schweißbacken auf diese so gekräuselte Kunststoffschlauchbahn gefahren, so ist häufig festzustellen, daß die mittels der Schweißbacken hergestellte Bodennaht nicht einwandfrei ausgebildet ist. So kann es sogar vorkommen, daß eine Folienlage aufgrund eines stärkeren Kräuseleffektes nicht mehr durch die Schweißbacken erfaßt wird, so daß an dieser Stelle die gebildete Bodennaht fehlerhaft ist. Aber selbst für den Fall, daß die Schweißbacken sämtliche Lagen der Kunststoffschlauchbahn erfassen, ist infolge des Kräuselns die Qualität der gebildeten Bodenschweißnaht beeinträchtigt.

Hieraus ergibt sich die Aufgabe, ein gattungsgemäßes Verfahren zum Herstellen von Kunststoffbeuteln derart weiterzubilden, daß die Qualität der Schweißnaht verbessert werden kann.

Erfindungsgemäß wird diese Aufgabe durch die Merkmale des kennzeichnenden Teils des Patentanspruchs 1 gelöst. Demgemäß erfaßt das dauerbeheizte Schweißbackenpaar die Kunststoffschlauchbahn bereits vor dem Schneiden und legt diese fest. Die Kunststoffschlauchbahn wird dann durch das Querschneidemesser geschnitten, bevor die Wärme von dem Schweißbackenpaar auf die Kunststoffschlauchbahn vollständig übergegangen ist.

Während beim bisherigen Stand der Technik die Bahnen also zunächst mit dem Messer geschnitten wurden und anschließend erst von dem Schweißbackenpaar erfaßt wurden, wird nach der erfindungsgemäßen Verfahrensfolge die Kunststoffschlauchbahn mittels der konstant temperierten Schweißbacken festgehalten und vor dem Zeitpunkt, an welchem die Wärme aufgrund von Wärmeleitung auf die Folie vollständig übergegangen ist, mit dem Querschneidemesser geschnitten. Das Zeitintervall zwischen dem Schweißen und dem Schneiden liegt im Millisekundenbereich. Unmittelbar nach dem Schneiden der Folie wird die Folie durch die aufliegenden Schweißbacken durchgeschweißt sein.

Gemäß dieser Verfahrensführung haben die aufgeheizten Schweißbacken also nicht nur die Funktion, die Bodennaht des Beutels zu bilden. Vielmehr wird bereits vor dem Schneiden des Beutels durch die aufgeheizten Schweißbacken eine zursätzliche Haltefunktion ausgeführt.

Dabei ist es für den Fachmann überraschend, daß eine derartige Haltefunktion mit den voll aufgeheizten Schweißbacken erzielt werden kann. So ging der Fachmann davon aus, daß die Kunststoffschlauchbahn aufgrund ihrer thermoplastischen Eigenschaft aufgrund des Aufheizens durch die Schweißbacken unmittelbar nach Zusteuern der Schweißbacken aufgrund der übertragenen Wärme derart plastisch verformbar ist, daß ein sauberer Schnitt mittels eines Querschneidemessers nicht mehr möglich sei. Die vorliegende Erfindung setzt sich über diesen Vorbehalt des Fachmannes hinweg, indem sie die Erkenntnis nutzt, daß in sehr kurzen Zeitintervallen die Wärme von den vollaufgeheizten Schweißbacken noch nicht auf die Kunststoffolie übergegangen ist, so daß diese innerhalb eines derartigen Zeitintervalls noch geschnitten werden kann.

Um derartig kurze Zeitintervalle maschinell verwirklichen zu können, wird die Vorrichtung zur Durchführung dieses Verfahrens entsprechend der DE-OS 37 21 432 mit computergesteuerten Schrittmotoren bestückt, wobei die Vorzugswalzenpaare, das Schweißbackenpaar und die Querschneideinrichtung jeweils durch eigene Schrittmotoren angetrieben sein können. Hierdurch ist in vorteilhafter Weise bei der Verfahrensführung das in Millisekundenbereich liegende Zeitintervall zwischen dem Erfassen der Kunststoffschlauchbahn durch das Schweißbackenpaar und dem Schneiden durch das Querschneidemesser variierbar.

Ein Ausführungsbeispiel der Erfindung wird nachstehend anhand der Zeichnung näher erläutert. In dieser zeigt:

Fig. 1: eine Seitenansicht der Querschweiß- und Querschneideeinrichtung in schematischer Darstellung zu einem ersten Zeitpunkt der Verfahrensführung,

Fig. 2: die Vorrichtung nach Fig. 1 zu einem zweiten Verfahrenszeitpunkt, in dem der zwischen den Vorzugsrollen und einer Druckleiste festgeklemmte Bahnabschnitt durch eine weitere Druckleiste vor dem Trennschnitt gespannt wird,

Fig. 3: die Vorrichtung nach Fig. 1 mit auf die Nadelreihe aufgenadelten Öffnungsrändern der Beutel und

Fig. 4: die Vorrichtung nach Fig. 1 zu Beginn des Abtransports des fertigen Stapels nach Zurückziehen der Nadelreihe.

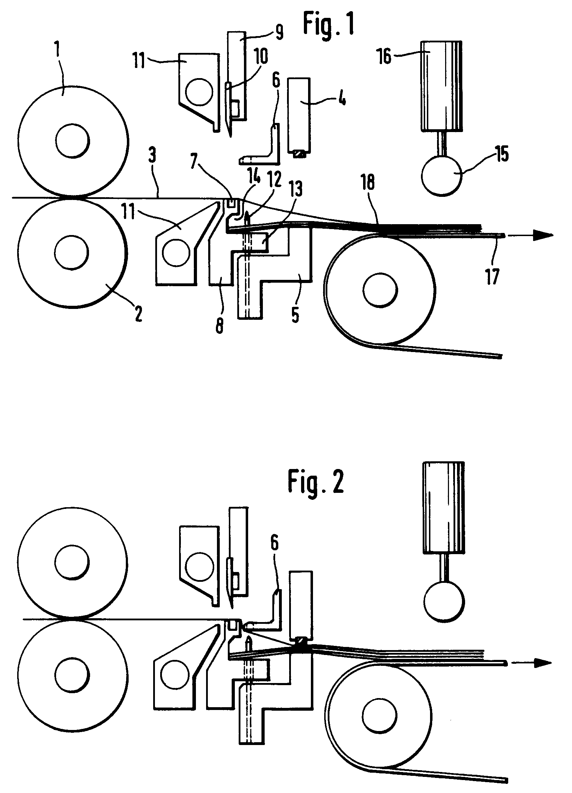

Bei der in der Zeichnung dargestellten Vorrichtung ziehen die Vorzugswalzen 1 und 2 die Kunststoffschlauchbahn 3 taktweise jeweils um eine Beutellänge vor und klemmen diese zwischen sich fest. Zum gestreckten Vortragen des vorderen Bahnendes können nicht dargestellte Blasluftdüsen vorgesehen werden. Ist nun durch die Vorzugsrollen 1 und 2 ein genügend langes Schlauchbahnstück vorgezogen worden, senkt sich zunächst der aus der Druckleiste 4 bestehende Niederhalten auf ein Gegenlager ab, so daß die Bahn in der aus Fig. 2 ersichtlichen Weise zwischen Gegenlager 5 und Druckleiste 4 eingeklemmt ist. Unmittelbar danach fährt die Druckleiste 6 aus der in Fig. 1 dargestellten Lage in die in Fig. 2 dargestellte und drückt die Bahn dabei so stark nach unten, daß sich die Bahn mit Spannung über die Nut 7 der Gegendruckleiste 8 legt.

Anschließend wird in hier nicht dargestellter Weise das dauerbeheizte Schweißbackenpaar 11 auf die Kunststoffschlauchbahn 3 heruntergefahren, so daß diese durch das Schweißbackenpaar 11 erfaßt und festgelegt wird. Innerhalb eines im Bereich von Millisekunden liegenden Zeitintervalls wird anschließend durch Herunterfahren des oberen Trennmesserhalters 9 mit dem an diesem befestigten Querschneidemesser 10 die Bahn 3 durchtrennt. Da die Kunststoffschlauchbahn bereits vor dem Schnitt mittels des Querschneidemessers 10 erfaßt und festgelegt wurde, kann das bei dem konventionellen Verfahren zu beobachtende Kräuseln der aufeinanderliegenden Folienenden der Kunststoffschlauchbahn 3 unterbunden werden. Sowohl die Vorzugsrollen 1,2, wie auch die Schweißbacken 11 und der Trennmesserhalter 9 werden durch getrennte, hier nicht dargestellte computergesteuerte Schrittmotoren angetrieben.

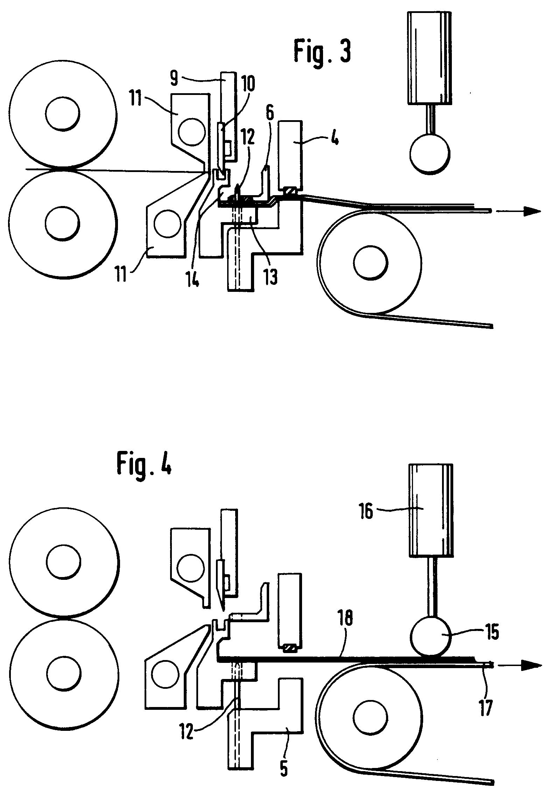

Unmittelbar nach dem Schnitt fährt die Druckleiste 6 in die in Fig. 3 dargestellte Lage und drückt dabei den von der Bahn abgetrennten Beutel auf die mit der Gegendruckleiste 8 verbundene Auflageleiste 13. Während dieses Arbeitsschrittes sind die Schweißbacken 11 noch geschlossen und die Querschweißnaht wird gebildet. Die Auflageleiste 13 weist Durchgangsbohrungen auf, durch die Nadeln 12 nach oben hervorragen, so daß der abgetrennte Beutel gleichzeitig aufgenadelt wird. Die Nadeln 12 sind fest mit dem abgewinkelten Profil des Gegenlagers 5 verbunden.

Auch die Druckleiste 6 weist Bohrungen auf, so daß die einzelnen Beutel auf die Nadeln 12 gegen die Auflageleiste 13 aufgeschoben werden können.

Die Einbuchtung 14 unter der Nut 7 in der Gegendruckleiste 8 dient der stauchungsfreien Ablage der Beutelkanten.

Aus der in Fig. 3 gezeigten Lage fahren die einzelnen Elemente sodann wieder in die in Fig. 1 dargestellte Lage zurück, so daß von den Vorzugsrollen 1, 2, die Bahn 3 um eine weitere Abschnittlänge, ggf. unter Zuhilfenahme von Blasluftdüsen, vorgezogen werden kann. Sobald genügend Beutel gestapelt worden sind, fährt das Gegenlager 5 nach unten, wobei sich die Nadeln 12 aus dem Beutelstapel herausziehen. Sobald dies geschehen ist, senkt sich die Tipperwalze 15, die über die Kolben-Zylinder-Einheit 16 gesteuert wird, auf das Förderband 17 ab, das sodann zum Abtransport der gebildeten Stapel 18 eingeschaltet wird.

**Patentansprüche**

1. Verfahren zum Herstellen von Kunststoffbeuteln mit folgenden Schritten:
   - taktweises Vorziehen einer Kunststoffschlauchbahn um eine Beutellänge,
   - Schneiden der Kunststoffschlauchbahn mittels eines Querschneidemessers und
   - Bilden einer Bodennaht mit einem dauerbeheiztem Schweißbackenpaar,

   **dadurch gekennzeichnet,**

   daß das dauerbeheizte Schweißbackenpaar (11) die Kunststoffschlauchbahn (3) bereits vor dem Schneiden erfaßt und festlegt und daß die Kunststoffschlauchbahn (3) durch das Querschneidemesser (10) geschnitten wird, bevor die Wärme von dem Schweißbackenpaar (11) auf die Kunststoffschlauchbahn (3) vollständig übergegangen ist.

2. Verfahren nach Anspruch 1, dadurch gekennzeichnet, daß das Zeitintervall zwischen dem Erfassen der Kunststoffschlauchbahn (3) durch das Schweißbackenpaar (11) und dem Schneiden durch das Querschneidemesser (10) variierbar ist.

Fig. 1

Fig. 2

## Fig. 3

## Fig. 4

## EINSCHLÄGIGE DOKUMENTE

EP 91111661.4

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| X | US - A - 3 940 305 (STENBERG) * Spalte 3, Zeilen 19-40 * | 1 | B 29 C 65/74 |
| A | | 2 | |
| X | DE - B - 1 182 414 (LEHMACHER) * Spalte 5, Zeilen 5-18 * | 1 | |
| A | | 2 | |
| X | DE - B2 - 2 005 040 (LAGAIN) * Spalte 2, Zeilen 59-66 * | 1 | |
| A | | 2 | |
| A | DE - A1 - 3 425 430 (WOMAKO) * Seite 2, Zeilen 21-28 * ---- | 1,2 | |

RECHERCHIERTE SACHGEBIETE (Int. Cl.⁵)

B 29 C

Der vorliegende Recherchenbericht wurde für alle Patentansprüche erstellt.

| Recherchenort | Abschlußdatum der Recherche | Prüfer |
|---|---|---|
| WIEN | 25-09-1991 | REININGER |